# EUROPEAN PATENT APPLICATION

(11) **EP 3 469 867 A2**
(43) Date of publication of application: **17.04.2019**
(21) Application number: 18199268.6
(22) Date of filing: 09.10.2018
(51) Int. Cl.: A01B 79/00, G06Q 50/02

(54) **WORK SETTING SYSTEM FOR WORKING VEHICLE**

(30) Priority: 11.10.2017 JP 2017197692; 11.10.2017 JP 2017197693
(71) Applicant: Iseki & Co., Ltd., Matsuyama-shi, Ehime 799-2692 (JP)
(72) Inventor: SAWAKI, Hiroto, Iyo-gun, Ehime 791-2193 (JP)
(74) Representative: TBK

(57) **Abstract**

[Object] To provide a work setting system for a working vehicle to save labor in work setting.

[Solution] The invention includes: a server that sends and receives information to and from a working vehicle V1, V2, V3; and a work setting means that sets work performed by the working vehicle V1, V2, V3; wherein the server stores work setting information respectively in association with a plurality of operators W1, W2, W3 operating the working vehicle V1, V2, V3; and the working vehicle V1, V2, V3 reads out work setting information associated with an operator that actually operates the working vehicle V1, V2, V3, and performs work according to the read work setting information, and therefore, labor is saved in work setting, and work is perform according to the read work setting information.

## Description

### [Technical Field]

The present invention relates to a work setting system for a working vehicle.

### [Background Art]

A known working vehicle stores a plurality of pattern combinations of states of setting items of a working vehicle in association with a plurality of work contents, and when a working vehicle is used by a plurality of operators, a pattern that the operator prefers is read out from the stored ones every time the operator is changed, and since there is no need of troublesome setting every time, work is efficiently started (Patent Document 1).

### [Prior Art Documents]

### [Patent Document]

[Patent Document 1] Japanese Unexamined Patent Application Publication No. 2008-184121

### [Summary]

### [Problems to be Solved by Invention]

With the conventional configuration of Patent Document 1, setting is made only for one working vehicle, and therefore, every time the working vehicle is changed, setting is required.

An object of the present invention is to provide a work setting system for a working vehicle to save labor in work setting.

### [Means for Solving Problems]

The above object of the present invention is achieved by the following solution.

More specifically, the aspect of the invention of claim 1 is a work setting system for a working vehicle, the system comprising: a server (101) that sends and receives information to and from a working vehicle (1); and a work setting means (TAB, Pa1) that sets work performed by the working vehicle (1); wherein the server (101) stores work setting information respectively in association with a plurality of operators (W1, W2, W3) operating the working vehicle (1); and the working vehicle (1) reads out work setting information associated with an operator that actually operates the working vehicle (1), and performs work according to the read work setting information.

The aspect of the invention of claim 2 is a work setting system for a working vehicle, the system comprising: a server (101) that sends and receives information to and from a working vehicle (1); and a work setting means (TAB, Pa1) that sets work performed by the working vehicle (1); wherein the working vehicle (1) includes a position measurement unit (TAB4, 230) for measuring the position of the working vehicle; the server (101) stores work setting information respectively in association with a plurality of farm fields (H1, H2) to be worked; and the working vehicle (1) reads out work setting information associated with the farm field (H1, H2) identified according to the position measurement result of the working vehicle (1), and work is performed according to the read work setting information.

The aspect of the invention of claim 3 is the work setting system for a working vehicle of claim 1, wherein the work setting information includes at least one of transmission responsiveness, cultivation depth, and automatic brake strength of the working vehicle (1), on-off of an auto lift function to automatically raise an implement (18) in coordination with a turn of the working vehicle (1), on-off of an auto brake function to automatically brake an inner wheel of the working vehicle (1) in a turn thereof, on-off of a backup function to automatically raise the implement (18) when the working vehicle (1) travels backward, and the engine speed.

The aspect of the invention of claim 4 is the work setting system for a working vehicle of claim 2, wherein the work setting information includes at least one of transmission responsiveness, cultivation depth, and automatic brake strength of the working vehicle (1), on-off of an auto lift function to automatically raise an implement (18) in coordination with a turn of the working vehicle (1), on-off of an auto brake function to automatically brake an inner wheel of the working vehicle (1) in a turn thereof, on-off of a backup function to automatically raise the implement (18) when the working vehicle (1) travels backward, and the engine speed.

The aspect of the invention of claim 5 is the work setting system for a working vehicle of claim 1 or 3, wherein the server (101) stores the work setting information respectively in association with at least one of a plurality of working vehicles (V1, V2, V3), a plurality of farm fields (H1, H2) and a plurality of work contents.

The aspect of the invention of claim 6 is the work setting system for a working vehicle of claim 2 or 4, wherein the server (101) stores the work setting information respectively in association with at least one of a plurality of working vehicles (V1, V2, V3), a plurality of operators (W1, W2, W3) and a plurality of work contents.

The aspect of the invention of claim 7 is the work setting system for a working vehicle of claim 5 or 6, wherein when no work setting information is stored with the server (101) in association with the working vehicle (1), the farm field (H1, H2), the operator (W1, W2, W3), or the work content, the server (101) applies a work setting for the working vehicle (1) to actually use to perform work, according to another work setting information already stored.

The aspect of the invention of claim 8 is the work setting system for a working vehicle of claim 7, wherein said another work setting information is associated with at least one of the same the working vehicle (1), the same farm field (H1, H2) or the same operator (W1, W2, W3) that is already stored.

The aspect of the invention of claim 9 is the work setting system for a working vehicle of any one of claims 1 to 8, wherein when the work setting information registered by an administrator of the server (101) is stored with the server (101), the working vehicle (1) performs work using the administrator's work setting information.

### [Advantageous Effects]

According to the aspect of the invention of claim 1, the work setting system for a working vehicle stores work setting information respectively in association with a plurality of operators, and by reading out work setting information associated with an operator actually operating the working vehicle (1), labor is saved in work setting, and the working vehicle (1) performs work according to the work setting.

According to the aspect of the invention of claim 2, work setting information is stored respectively in association with a plurality of farm fields (H1, H2) to be worked, and by reading out work setting information associated with a farm field (H1, H2) identified according to the position measurement result of the working vehicle (1), labor is saved in work setting, and the working vehicle (1) performs work according to the work setting.

According to the aspect of the invention of claim 3, in addition to the advantageous effects of the aspect of the invention of claim 1, the server (101) stores and reads out work setting information that conventionally needs to be input according to their respective preferences and habits every time a plurality of operators (W1, W2, W3) take turns, and therefore, labor is saved in work setting, and the working vehicle (1) performs work according to the work setting.

According to the aspect of the invention of claim 4, in addition to the advantageous effects of the aspect of the invention of claim 2, the server (101) stores and reads out work setting information that conventionally needs to be input according to soil stiffness, depths, etc. of the respective farm fields (H1, H2), and therefore, labor is saved in work setting, and the working vehicle (1) performs work according to the work setting.

According to the aspect of the invention of claim 5, in addition to the advantageous effects of the aspect of the invention of claim 1 or 3, since work is performed just by reading out work setting information stored with the server (101), and compared with a case wherein work is set for the respective working vehicles (V1, V2, V3), farm fields (H1, H2) or work contents, labor is saved in work setting.

According to the aspect of the invention of claim 6, in addition to the advantageous effects of the aspect of the invention of claim 2 or 4, since work is performed just by reading out work setting information stored with the server (101), and compared with a case wherein work is set for the respective working vehicles (V1, V2, V3), operators (W1, W2, W3) or work contents, labor is saved in work setting.

According to the aspect of the invention of claim 7, in addition to the advantageous effects of the aspect of the invention of claim 5 or 6, when no corresponding work setting is registered, another work setting information already stored is used. More specifically, even when the operator uses a working vehicle (V1, V2, V3) for the first time in a farm field, which is different from another working vehicle (V1, V2, V3) that s/he has been using, or when s/he performs work in a farm field (H1, H2) for the first time, since another work setting already stored is used, labor is saved in work setting compared with a case in which a work setting is input out of nothing.

According to the aspect of the invention of claim 8, in addition to the advantageous effects of the aspect of the invention of claim 5 or 6, when no corresponding work setting is registered, another, already stored work setting information set with similar conditions is used. More specifically, even when the operator uses a working vehicle (V1, V2, V3) for the first time in a farm field, which is different from another working vehicle (V1, V2, V3) that s/he has been using, or when s/he performs work in a farm field (H1, H2) for the first time, since another work setting previously set for the same vehicle or the same farm field is used, labor is saved in appropriately setting work compared with a case in which a work setting is input out of nothing.

According to the aspect of the invention of claim 9, in addition to the advantageous effects of the aspect of the invention of any one of claims 1 to 8, since the administrator's setting is given priority, the administrator is able to manage the work setting.

### [Brief Description of Drawings]

[Fig. 1] Fig. 1 illustrates a side view of a working vehicle of the present embodiment.
[Fig. 2] Fig. 2 illustrates an explanatory diagram of operation members provided in the front of the seat of the working vehicle of the present embodiment.
[Fig. 3] Fig. 3 illustrates an explanatory diagram of operation members provided on the right side of the seat of the working vehicle of the present embodiment.
[Fig. 4] Fig. 4 illustrates a functional block diagram of an operation system of the working vehicle of the present embodiment.
[Fig. 5] Fig. 5 illustrates an explanatory diagram of examples of work setting images displayed on a terminal of the present embodiment: Fig. 5 (A) illustrates an explanatory diagram of an authentication image; Fig. 5 (B) illustrates an explanatory diagram of an operation-selecting image; Fig. 5 (C) illustrates an explanatory diagram of a work setting registration image; Fig. 5 (D) illustrates an explanatory diagram of a work setting selection image; and Fig. 5 (E) illustrates an explanatory diagram of an image displayed when work is performed.
[Fig. 6] Fig. 6 illustrates an explanatory diagram of example work setting information stored in the server of the Embodiment 1.
[Fig. 7] Fig. 7 illustrates an explanatory diagram of a flowchart of a work setting process of the Embodiment 1.

### [Description of Embodiments]

Now, preferable embodiments of the present invention will be explained with reference to the drawings.

### (Working Vehicle)

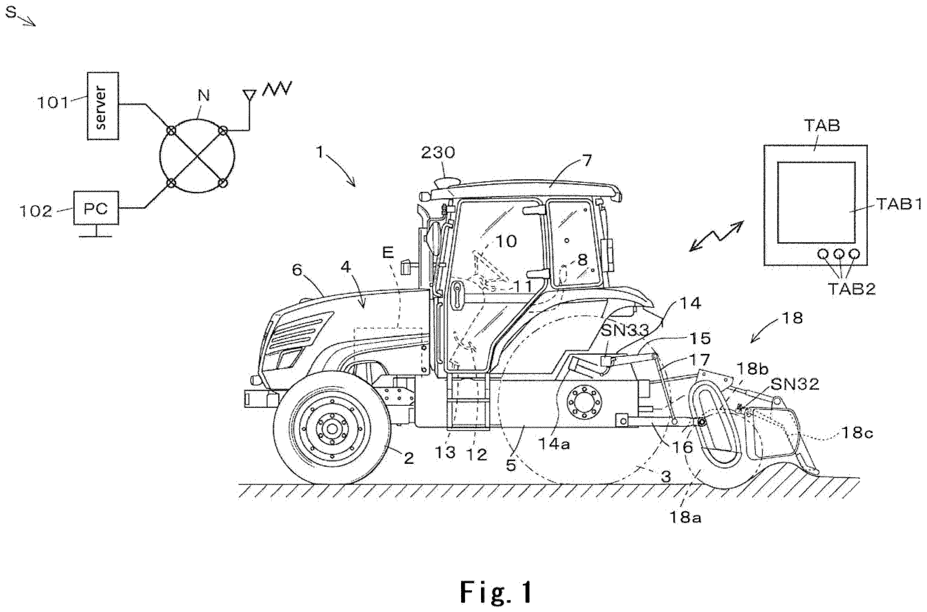

Fig. 1 illustrates a side view of a working vehicle of the present embodiment.

In Fig. 1, a work setting system for a working vehicle S of the present embodiment includes a tractor 1, a farm machine as an example of a working vehicle. The tractor 1 includes: a vehicle body, front wheels 2, 2 and rear wheels 3, 3 respectively provided in the front and rear of the vehicle body; an engine room 4 disposed in the front of the vehicle body; an engine E disposed in the engine room 4; a transmission case 5; and a transmission device, disposed in the transmission case 5, for transmitting the rotative power of the engine E to the front wheels 2, 2 and the rear wheels 3, 3 after appropriately reducing its speed. The engine room 4 is covered by a hood 6. Also, at the rear of the machine body, an implement such as a rotary cultivating device 18 is attached, and a PTO shaft (not illustrated) is provided to drive the implement.

On top of the vehicle body, a cabin 7 is provided. On top of the cabin 7, an external GPS 230 as an example of a position measurement unit is disposed. Inside the cabin 7, an operator's seat 8 is disposed above the transmission case 5, and a steering wheel 10, a forward-reverse travel lever 11, a parking brake (not illustrated), etc. are disposed in front of the operator's seat 8. In front of the operator's seat 8, a speed meter (not illustrated), switches for the respective operations (discussed below) and the like are disposed. In the front and at the bottom of the operator's seat 8, travel operating members including a clutch pedal 12, an accelerator pedal 13, right and left brake pedals (discussed below), etc. are disposed.

In Fig. 1, a hydraulic cylinder case 14 is provided above the rear of the transmission case 5, and lift arms 15, 15 are rotatably attached to the right and left sides of the hydraulic cylinder case 14. Between the lift arms 15, 15 and lower links 16, 16, lift rods 17, 17 are disposed, and the rotary cultivating device 18 as an example of an implement is connected to the rear of the lower links 16, 16.

When hydraulic oil is supplied to a hydraulic cylinder 14a housed in the hydraulic cylinder case 14, the lift arms 15, 15 are rotated and raised, and the implement (rotary cultivating device) 18 is raised by means of the lift rod 17, the lower link 16, etc. On the other hand, when hydraulic oil in the hydraulic cylinder 14a is discharged into the transmission case 5 that also functions as a hydraulic tank, the lift arms 15, 15 are lowered down.

The rotary cultivating device 18 is connected to the rear of the vehicle body of the tractor 1, and includes a cultivating unit 18a, a main cover 18b for covering the cultivating unit 18a from above, and a rear cover 18c pivotally attached to the rear of the main cover 18b.

### (Explanation of Operation Member)

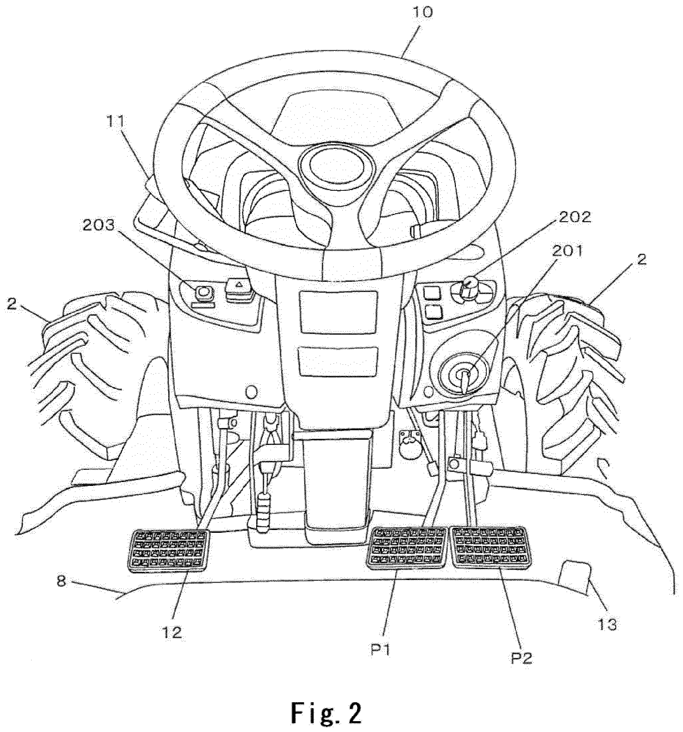

Fig. 2 illustrates an explanatory diagram of operation members provided in the front of the seat of the working vehicle of the present embodiment.

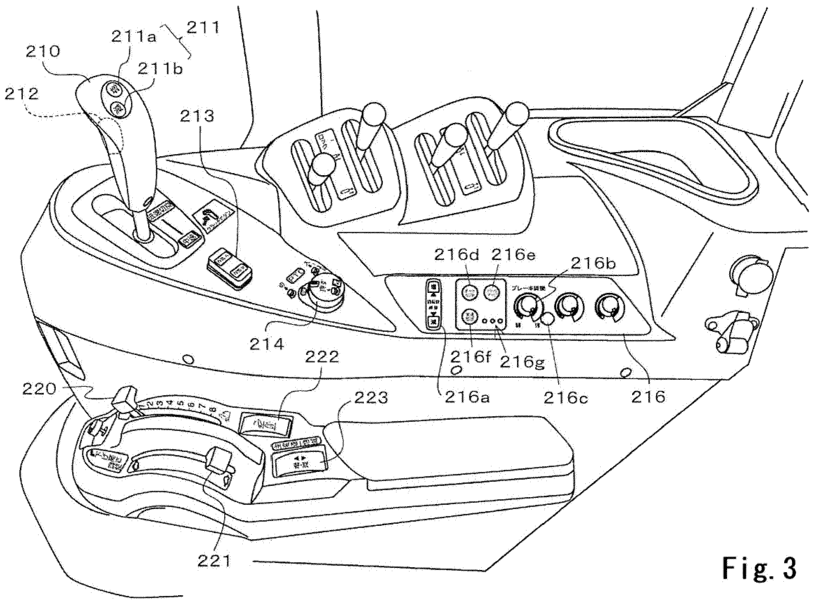

Fig. 3 illustrates an explanatory diagram of operation members provided on the right side of the seat of the working vehicle of the present embodiment.

In Fig. 2, disposed in the space inside the cabin 7, in a range of the operator operable from the operator's seat 8, are the steering wheel 10, the forward-reverse travel lever 11, a main key 201, a cultivation depth modulation dial 202 for modulating the cultivation depth, and a remote control mode switching switch 203 (switching member) for switching a remote control mode and a manual operation mode. Also, operation members such as the clutch pedal 12, the accelerator pedal 13, a left brake pedal P1, and the right brake pedal P2 are disposed below the steering wheel 10.

In Fig. 3, a sub transmission lever 210 is disposed in the front and on the right side of the cabin 7. The sub transmission lever 210 is shiftable between a low speed position in the front and a medium speed position in the rear. At a rear surface of the upper portion of the sub transmission lever 210, a main transmission operation unit 211 for increasing and decreasing the speed of the main transmission is provided. The main transmission operation unit 211 of the present embodiment includes a main transmission acceleration switch 211a for accelerating the main transmission, and a main transmission deceleration switch 211b for decelerating the main transmission. Also, a clutch button 212 for switching on/off a forward-reverse travel clutch 48 is provided at the front surface of the sub transmission lever 210. At the rear of the sub transmission lever 210, a constant speed switch (accelerator memory switch) 213 for performing work at a preliminarily-set constant speed A and constant speed B is disposed. At the rear of the constant speed switch 213, a PTO switch 214 for switching on-off a PTO clutch (not illustrated), which transmits/disconnects transmission of driving force to the PTO shaft, is disposed.

At the rear of the PTO switch 214, an operation panel 216 is provided. The operation panel 216 is provided with a speed increasing-decreasing switch (accelerator memory increasing-decreasing switch) 216a for increasing and decreasing the set value (the constant speeds A, B) of the engine speed E of the constant speed switch 213, if any is input.

The operation panel 216 is provided with a brake modulation dial 216b for modulating the brake pressure. Note that the brake pressure is a hydraulic pressure at which the brake operates, and if the brake pressure is high, it is easy to turn quickly easily damaging the farm field instead, while if it is low, making a quick turn is difficult but the farm field is less likely to be damaged.

The operation panel 216 is provided with an auto brake switch 216c for setting, when the tractor 1 turns, whether to automatically brake the inner wheel of the turn.

The operation panel 216 is provided with an auto lift switch 216d for setting whether to automatically raise the rotary cultivating device 18 in coordination with the turning of the tractor 1.

The operation panel 216 is provided with a backup switch 216e for setting, when the tractor 1 travels backward, whether to automatically raise the rotary cultivating device 18.

The operation panel 216 is provided with a transmission responsiveness modulation switch 216f for modulating responsiveness of the transmission by modulating the increasing speed of the clutch pressure of the hydraulic clutch when changing speeds, and an indication light 216g for indicating the setting (high, normal, low) of the current transmission responsiveness.

On the left side (inside the cabin 7) of the sub transmission lever 210, an implement raising-lowering lever 220 is disposed. The implement raising-lowering lever 220 of the present embodiment modulates the height of the implement 18 between 8 levels . An accelerator lever 221 for modulating the engine speed E is disposed inside the implement raising-lowering lever 220. At the rear of the implement raising-lowering lever 220, an implement raising-lowering switch 222 is disposed. The implement raising-lowering switch 222 raises or lowers the implement 18 just by a single touch input. At the rear of the implement raising-lowering switch 222, a main transmission increasing-decreasing switch 223 for increasing and decreasing the main transmission is disposed.

### (Explanation of Server and Terminal)

In Fig. 1, the work setting system for a working vehicle S of the Embodiment 1 includes a server 101 as an example of an information processing device. The server 101 sends and receives information to and from the tractor 1 via an internetwork N as an example of a communication line. Note that the tractor 1 of the Embodiment 1 communicates with the server 101 via the network N by wireless communication.

The network N is also connected with an administrator terminal 102 for the administrator of the work setting system for a working vehicle S to operate. The administrator terminal 102 also sends and receives information to and from the server 101 and the tractor 1.

Also, the work setting system for a working vehicle S of the Embodiment 1 includes a tablet TAB as an example of a terminal for the operator to use. The tablet terminal TAB sends and receives information to and from the tractor 1 by wireless communication.

### (Explanation of Functional Block Diagram)

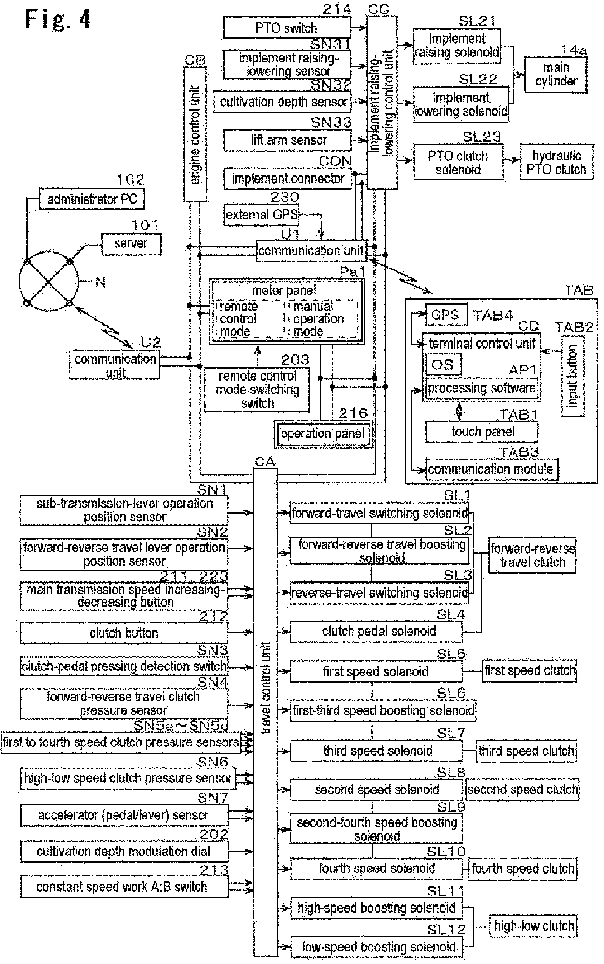

Fig. 4 illustrates a functional block diagram of an operation system of the working vehicle of the present embodiment.

In Fig. 4, the working vehicle operation system S of the Embodiment 1 includes control units CA to CC of the tractor; a meter panel Pa1 as an example of a control unit and that of a work setting means; a terminal control unit CD of the tablet terminal as an example of a terminal and that of a work setting means; and a control unit (not illustrated) of the server 101 or the administrator PC 102. The control units CA to CD respectively includes: an input-output interface (I/O) that externally inputs and outputs a signal for example; a read-only memory (ROM) storing programs, information, etc. for executing necessary processes; a random access memory (RAM) for temporarily storing necessary data; a central processing unit (CPU) for executing processes according to the programs stored in the ROM, etc.; and a compact information processing device, so-called microcomputer, provided with an oscillator, etc., and various functions are realized by executing programs stored in storage members such as the ROM, RAM, and non-volatile memory.

### (Control Unit of Tablet Terminal)

In Fig. 4, to the terminal control unit CD of the tablet terminal TAB, a signal output from signal output components including a touch panel TAB1 as an example of an input unit, an input button TAB2 such as a power button and a sound volume button, a communication module TAB3 as an example of a communication unit, and a GPS module TAB4 as an example of a position measurement unit, and the like is input. Therefore, information or a signal is input on the terminal control unit CD from the control units CA to CC of the tractor 1 or the server 101 by means of the communication module TAB3.

The terminal control unit CD is connected to the touch panel TAB1 as an example of a display, a speaker (not illustrated), the communication module TAB3, and other non-illustrated controlling components. The terminal control unit CD outputs a control signal to the controlling components. Therefore, information or a signal is output to the control units CA to CC of the tractor 1 or the server 101 by means of the communication module TAB3.

The terminal control unit CD executes a process according to an input signal from the signal output component TAB1, and outputs a control signal to the controlling components CA to CC. The terminal control unit CD of the present embodiment is provided with an operating system OS as an example of basic software, processing software AP1 as an example of application software and that of a processing means, and other non-illustrated pieces of application software (e.g., an Internet browser and document preparation software).

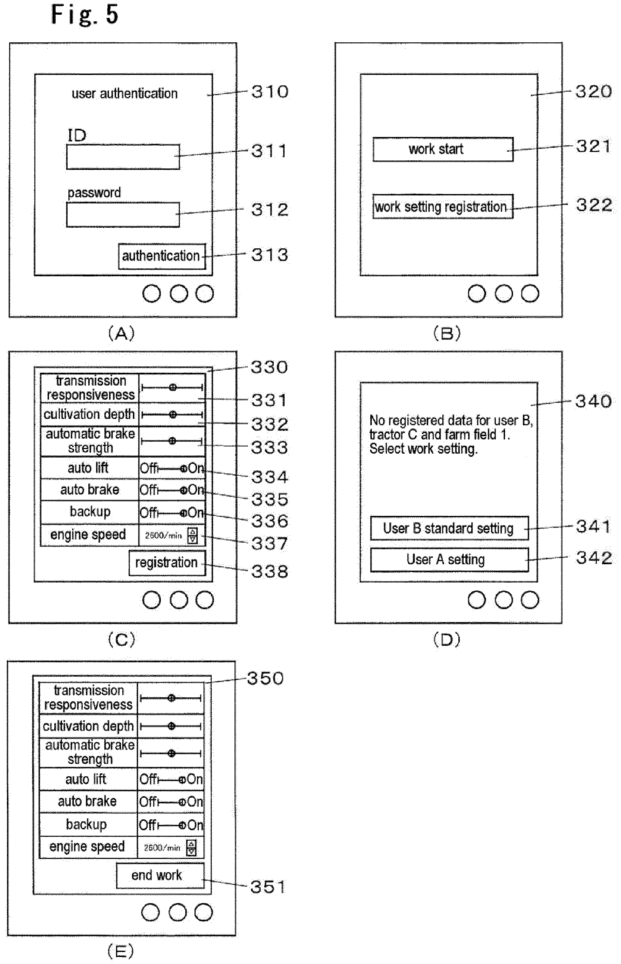

Fig. 5 illustrates an explanatory diagram of examples of work setting images displayed on a terminal of the present embodiment: Fig. 5 (A) illustrates an explanatory diagram of an authentication image; Fig. 5 (B) illustrates an explanatory diagram of an operation-selecting image; Fig. 5 (C) illustrates an explanatory diagram of a work setting registration image; Fig. 5 (D) illustrates an explanatory diagram of a work setting selection image; and Fig. 5 (E) illustrates an explanatory diagram of an image displayed when work is performed.

In Fig. 5, the processing software AP1 of the present embodiment displays, on the touch panel TAB1, input images 310, 320, 330, 340 for controlling the tractor 1. Note that one of the images 310 to 340 is displayed on the touch panel TAB1, and when the touch panel TAB1 is operated (by touch input, scroll input, flick input, etc.) to switch the images 310 to 340, the next image 310 to 340 is displayed.

In Fig. 5 (A), the authentication image 310 includes an ID input section 311 for inputting an ID as an example of identification information of the operator; a password input unit 312 for inputting a password as an example of security information, and an authentication execution input section 313 for executing authentication. Note that the Embodiment 1 describes an example configuration in which an ID and a password are used to execute authentication to use the system S, however, the present invention is not limited to this. For example, desired authentication methods including fingerprint authentication, vein authentication, iris authentication, face authentication, and voice authentication may be used. When authentication information is input on the images 311, 312, and an input is made on the authentication execution input section 313, the input information is sent to the server 101, and the authentication result of the server 101 is received.

In Fig. 5 (B), when authentication is made by the server 101, the operation selection image 320 is displayed on the touch panel TAB1. The operation selection image 320 includes a work start input section 321 to start work with the tractor 1, and a work setting registration section 322 to register a work setting. When an input is made on the work start input section 321, identification information of the operator, identification information of the tractor 1, and GPS information is sent to the server 101. Also, an input is made on the work setting registration section 322, the work setting registration image 330 of Fig. 5 (C) is displayed.

In Fig. 5 (C), the image 330 to register a work setting includes an input section 331 to input transmission responsiveness, an input section 332 to input a cultivation depth, an input section 333 to input automatic brake strength, an input section 334 to input on/off of the auto lift, an input section 335 to input on/off of the auto brake, and the input section 336 to input on/off of the backup, an input section 337 to input an engine speed, and an input section 338 to input execution of registration. According to inputs on the input sections 331 to 337, work settings such as transmission responsiveness and cultivation depth can be changed. Then, when an input is made on the registration input section 338, information input on the input sections 331 to 337, identification information of the operator, identification information of the tractor 1, and GPS information is sent to the server 101 and registered as work setting information.

In Fig. 5 (D), when an input is made on the work start input section 321, if the server 101 has no work setting information registered in association with the operator (e.g., "User B") currently using the system S, the currently-used tractor 1 (e.g., "Tractor C"), and the farm field (e.g., "the farm field H1") specified by the GPS, while work setting information that is standard for the operator and another work setting for another operator (e.g., User A) to perform work in the same farm field (the farm field H1) by the currently-used tractor 1 (tractor C) is registered, a work setting selection image 340 of Fig. 5 (D) is displayed. The work setting selection image 340 includes an input section 341 to select a standard setting, and an input section 342 to select a work setting of another operator. When an input is made on the input sections 341, 342, the input content is sent to the server 101, and work setting information conforming to the selection is received from the server 101.

In Fig. 5 (E), an image 350 displayed when work is performed displays a work setting such as transmission responsiveness received from the server 101. Note that which work setting is selected may also be displayed on the meter panel Pa1 of the tractor 1, for example, not only on the tablet terminal TAB. The image 350 displayed when work is performed is provided a work end input section 351 to input when the work is ended. Note that the tractor 1 is controlled according to a work setting received from the server 101. Note that if an input is made on the display image 350 to change transmission responsiveness, etc., a control signal is sent from the tablet terminal TAB to the control units CA to CC of the tractor 1, and reflected on controlling of the tractor 1.

When the tractor 1 has ended the work, the processing software AP1 of the present embodiment sends the work setting information finally displayed with the in-work display image 350 to the server 101, together with identification information of the operator, identification information of the tractor 1, GPS information of the farm field, etc. Therefore, in the server 101, the work setting information is updated. Note that the present embodiment describes an example configuration in which a work setting registered in the server 101 is updated, however, the present invention is not limited to this. For example, the work setting may not be updated if the administrator set some work settings for some specific operator, vehicle, and farm field as non-updatable.

Note that with the processing software AP1 of the present embodiment, if authentication cannot be executed, if work setting information cannot be received, or if work setting information cannot be updated because of failure in communication with the server 101 with no wireless communication service available, for example, it is displayed so (not illustrated).

### (Control Unit of Tractor)

The control units CA to CC, Pa1 of the tractor of the present embodiment are comprised of a so-called electronic control unit, ECU, for example. The control units CA to CC are connected by a controller area network, CAN, as a communication line, and accessible each other. Also connected to the CAN are a communication unit U1 for receiving GPS positioning information from the external GPS 230 as an example of a position measurement unit and communicating with the tablet terminal TAB, a communication unit U2 for communicating with the server 101 and the like, the meter panel Pa1 of the tractor 1, and the operation panel 216, and communication information, operation information and the like is sent to and received from the control units CA to CC.

### (Explanation of Meter Panel Pa1)

To the meter panel Pa1, an output signal is input from the remote control mode switching switch 203 and other non-illustrated signal output components.

If the input on the remote control mode switching switch 203 is the manual operation mode, the meter panel Pa1 displays on the display unit of the meter panel Pa1 that the mode is manual operation, and outputs a control signal to the control units CA to CC to control the tractor 1 according to the inputs on the operation members such as the steering wheels 10, the accelerator pedal 13, and the main transmission increasing-decreasing buttons 211, 223. If the input on the remote control mode switching switch 203 is the remote control mode, the meter panel Pa1 displays on the display unit of the meter panel Pa1 that the mode is remote control, and outputs a control signal to the control units CA to CC to control the tractor 1 according to the input information (work setting) received from the tablet terminal TAB.

Note that the present embodiment describes an example configuration in which the remote control mode and the manual operation mode are switched by the remote control mode switching switch 203, however, the present invention is not limited to this. For example, the remote control mode and the manual operation mode may be switched by an input on the tablet terminal TAB.

Or, the remote control mode and the manual operation mode may be switched by a process on the server 101 (e.g., when specific time has been reached, or when the tractor 1 has entered a specific area of the farm field). Also, the remote control mode and the manual operation mode may be switched by a combination of an input on the remote control mode switching switch 203, an input on the tablet terminal TAB, and a process on the server 101.

### (Explanation of Travel Control Unit CA)

### (Signal Output Components Connected to Travel Control Unit CA)

An output signal is input on the travel control unit CA from signal output components including a sub-transmission-lever operation position sensor SN1, a forward-reverse travel lever operation position sensor SN2, the main transmission increasing-decreasing switches 211, 223, the clutch button 212, a clutch-pedal pressing detection switch SN3, a forward-reverse travel clutch pressure sensor SN4, first to fourth speed clutch pressure sensors SN5a to SN5d, a high-low speed clutch pressure sensor SN6, an accelerator sensor SN7, the cultivation depth modulation dial 202, and the constant speed switch 213.

The sub-transmission-lever operation position sensor SN1 detects the position of the sub transmission lever 210. The forward-reverse travel lever operation position sensor SN2 detects the position of the forward-reverse travel lever 11. The clutch-pedal pressing detection switch SN3 detects whether the clutch pedal 12 has been pressed, when the switch is pushed as a result of the clutch pedal 12 being pressed. The forward-reverse travel clutch pressure sensor SN4 detects the pressure of the hydraulic fluid (clutch pressure) for activating the forward-reverse travel clutch (normal-reverse clutch) 48. The first to fourth speed clutch pressure sensors SN5a to SN5d detect the pressure of the hydraulic fluid (clutch pressure) for activating the clutch controlling the first to fourth speeds of the main transmission unit (multi-speed transmission device) . The high-low speed clutch pressure sensor SN6 detects the pressure of the hydraulic fluid (clutch pressure) for activating the high-low clutch. The accelerator sensor SN7 detects the position of the accelerator pedal 13 and the accelerator lever 221.

### (Components to be Controlled, Connected to Travel Control Unit CA)

The travel control unit CA is connected to a forward-travel switching solenoid SL1, a forward-reverse travel boosting solenoid SL2, a reverse-travel switching solenoid SL3, a clutch pedal solenoid SL4, a first speed solenoid SL5, a first-third speed boosting solenoid SL6, a third speed solenoid SL7, a second speed solenoid SL8, a second-fourth speed boosting solenoid SL9, a fourth speed solenoid SL10, a high-speed boosting solenoid SL11, a low-speed boosting solenoid SL12, and other non-illustrated controlling components.

If the detection result of the forward-reverse travel lever operation position sensor SN2 is forward travel, the forward-travel switching solenoid SL1 activates a control valve for the hydraulic fluid so that the normal-rotation clutch gear of the forward-reverse travel clutch (normal-reverse clutch) is engaged. The forward-reverse travel boosting solenoid SL2 controls a proportional control valve for the hydraulic fluid supplied to the forward-reverse travel clutch. According to the detection result of the forward-reverse travel clutch pressure sensor SN4, the forward-reverse travel boosting solenoid SL2 of the present embodiment controls the increase rate of the clutch pressure when the forward-reverse travel clutch is engaged for the forward travel or reverse travel. When the detection result of the forward-reverse travel lever operation position sensor SN2 is reverse travel, the reverse-travel switching solenoid SL3 activates the control valve for the hydraulic fluid so that the reverse-rotation clutch gear of the forward-reverse travel clutch (normal-reverse clutch) is engaged. Note that when an input is made on the clutch button 212 or when the clutch-pedal pressing detection switch SN3 has detected the pressing, the switching solenoids SL1, SL3 switch the control valve so that the clutch gears are not engaged. When the clutch is disengaged according to an input on the clutch button 212, the clutch pedal solenoid SL4 makes contact with the clutch pedal 12 and moves it to a position to which it is pressed.

When an input is made to obtain the first speed by an input on the main transmission increasing-decreasing buttons 211, 223, the first speed solenoid SL5 activates the control valve for the hydraulic fluid so that the gear for the first speed is engaged. When an input is made to obtain the third speed by an input on the main transmission increasing-decreasing buttons 211, 223, the third speed solenoid SL7 activates the control valve for the hydraulic fluid so that the gear for the third speed is engaged. According to the detection result of the first speed clutch pressure sensor SN5a or the third speed clutch pressure sensor SN5c, the first-third speed boosting solenoid SL6 controls the proportional control valve for the hydraulic fluid supplied to the first-third speed clutch to control the increase rate of the clutch pressure. When an input is made to obtain the second speed by an input on the main transmission increasing-decreasing buttons 211, 223, the second speed solenoid SL8 activates the control valve for the hydraulic fluid so that the gear for the second speed is engaged. When an input is made to obtain the fourth speed by an input on the main transmission increasing-decreasing buttons 211, 223, the fourth speed solenoid SL10 activates the control valve for the hydraulic fluid so that the gear for the fourth speed is engaged. According to the detection result of the second speed clutch pressure sensor SN5b or the fourth speed clutch pressure sensor SN5d, the second-fourth speed boosting solenoid SL9 controls the proportional control valve for the hydraulic fluid supplied to the second-fourth speed clutch, in order to control the increase rate of the clutch pressure.

In response to the sub-transmission-lever operation position sensor SN1, the high-speed boosting solenoid SL11 and the low-speed boosting solenoid SL12 activates the control valve for the hydraulic fluid so that the high-low clutch is engaged. Note that the boosting solenoids SL11, SL12 increase the clutch pressure (hydraulic pressure) according to the detection result of the high-low speed clutch pressure sensor SN6.

### (Engine Control Unit CB)

An output signal from non-illustrated signal output components such as an engine revolution sensor is input on an engine control unit CB, which is connected to a fuel pump and other non-illustrated controlling components.

The engine control unit CB executes a process according to an output signal or the like from the signal output components, and outputs a control signal to the controlling components, etc. The engine control unit CB controls the engine speed E according to an input on the accelerator levers 204, 221, the accelerator pedal 13, and the constant speed switch 213. Note that such control is conventionally known, and its detailed explanations are omitted since the configuration of Japanese Unexamined Patent Application Publication No. 2013-24038, for example, may be applied. When a turn is being made with the steering wheel 10 twisted, the engine control unit CB may decrease the engine speed to make a turn at a reduced speed, and when the steering wheel 10 is returned to straight travelling, the speed may be controlled to return to the original one. As described here, reducing the engine speed when making a turn, wherein the implement is raised and the load is lighter, undesirable waste of the fuel consumption is prevented. Also, by reducing the speed in a turn, the turnability is improved, and damage to the farm field is reduced as the wheels are less likely to dig the soil.

### (Implement raising-lowering control unit CC)

An output signal is input on an implement raising-lowering control unit CC from signal output components including an implement raising-lowering sensor SN31, a cultivation depth sensor SN32, a lift arm sensor SN33, the PTO switch 214, and an implement connector CON.

Here, in the present embodiment, the implement connector CON is configured in conformity with the communication standard AG-PORT, for example. The implement connector CON is electrically connected to the connector of the implement such as the rotary cultivating device 18, sends a control signal to the control unit of the implement, and reads out ID information that identifies the implement from the implement.

Note that the implement raising-lowering sensor SN31 detects the operation position of the position lever (the implement raising-lowering lever 220) for raising and lowering the lift arms 15, 15. The cultivation depth sensor SN32 is mounted on the implement 18, and detects the cultivation depth of the implement 18. The lift arm sensor SN33 is mounted in the proximity of the base of the lift arm 15, and detects the height of the lift arm 15.

The implement raising-lowering control unit CC is connected to an implement raising solenoid SL21, an implement lowering solenoid SL22, a PTO clutch solenoid SL23, and other non-illustrated controlling components.

The implement raising-lowering control unit CC executes a process according to an output signal from the signal output components, the control units and the like, and outputs a control signal to the controlling components, the control units and the like.

The implement raising-lowering control unit CC of the present embodiment controls the conductive state and the non-conductive state of the implement raising solenoid SL21 and the implement lowering solenoid SL22, according to the detection result of the sensors SN31 to SN33 or an input on the cultivation depth modulation dial 202. In this way, hydraulic fluid is supplied to and discharged from the hydraulic cylinder 14a, and raising and lowering of the lift arms 15, 15 is controlled.

The PTO clutch solenoid SL23 controls the control valve for supplying hydraulic fluid to the PTO clutch according to an on/off input on the PTO switch 214.

Note that the control units CA to CC of the present embodiment determine whether the mode is the manual operation or the remote control according to a control signal from the meter panel Pa1. Then, if the mode is the manual operation, the control units CA to CC control components to be controlled, such as the clutches, the steering cylinder, the hydraulic cylinder 14a, and the engine E, according to an input from operation members including the main transmission increasing-decreasing buttons 211, 223, the sub transmission lever 210, the forward-reverse travel lever 11, the clutch button 212, the clutch pedal 12, the accelerator pedal 13, the PTO switch 214, the accelerator lever 221, the cultivation depth modulation dial 202, the constant speed switch 213, the steering wheel 10, and the implement raising-lowering lever 220.

### (Control Unit of Server)

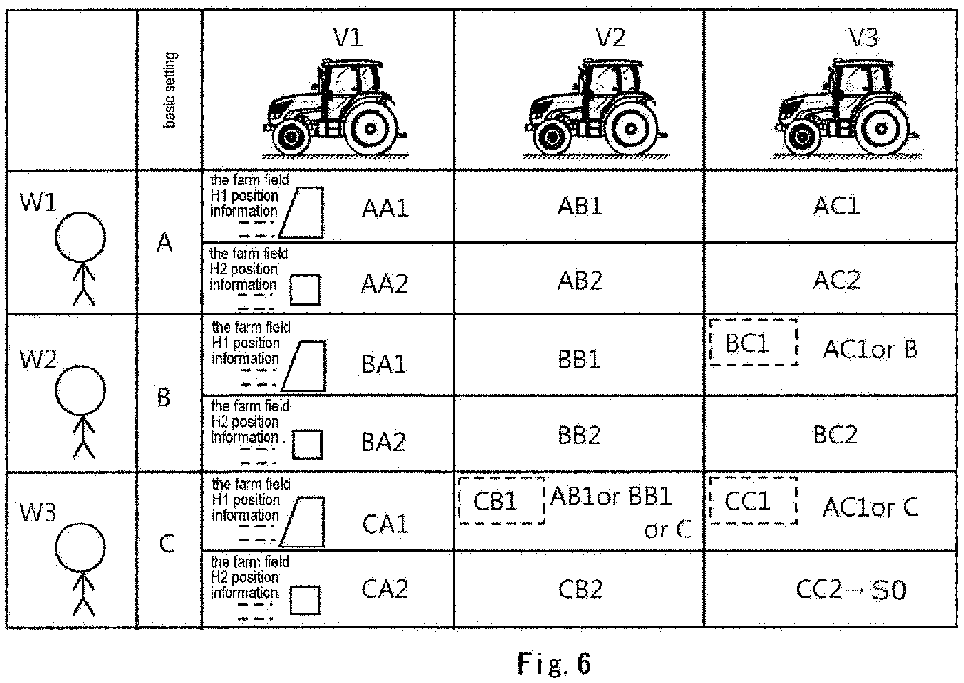

Fig. 6 illustrates an explanatory diagram of example work setting information stored in the server of the Embodiment 1.

The server 101 receives and processes information from the tractor 1, the tablet terminal TAB, and the administrator PC 102, and sends the processing results. The server 101 of the present embodiment stores work setting information. In Fig. 6, in the work setting information of the present embodiment, work settings are stored in association with the respective operators. More specifically, work settings are registered respectively in association with operators W1, W2, W3. Also in the present embodiment, work settings are stored respectively in association with the operators W1 to W3, in association with the respective tractors V1, V2, V3.

Moreover in the present embodiment, work settings are stored respectively in association with the operators W1 to W3 and the tractors V1 to V3, respectively in association with farm fields H1, H2. Note that in the present embodiment, for the farm fields H1, H2, GPS information of their areas is registered with the server 101, and the farm fields H1, H2 whose areas include GPS position information sent from the tablet terminal TAB (or located in a close distance (e.g., 50 m)) are determined to be the farm fields to be worked.

Note that the present embodiment describes an example configuration in which the GPS position information of the tablet terminal TAB is used, however, the invention is not limited to this, and the position information of the external GPS 230 mounted on the tractor 1, or the position information of both may be used.

Therefore in the present embodiment, as illustrated in Fig. 6, a work setting AA1 for the operator W1 to perform work in the farm field H1 using the tractor V1 is stored, and a work setting AB1 for the operator W1 to perform work in the farm field H1 using the tractor V2 is stored. Note that the work settings AA1, AB1, ... respectively store information on the respective settings such as transmission responsiveness, cultivation depths, etc.

Furthermore in the present embodiment, standard settings A, B, C are also stored for the operators W1 to W3. Even when no specific work setting is registered with the tractors V1 to V3 and the farm fields H1, H2, standard work settings of transmission responsiveness, etc. for the respective operators W1 to W3 are stored. Fig. 6 illustrates an example in which standard settings are registered for all of the operators W1 to W3, however, the invention is not limited to this, and standard settings may be registered only for some of the operators, or may not be set at all for any of the operators.

Note that in the present embodiment, work settings and standard settings are registered and updated according to the information input in the image 330 on the tablet terminal TAB for registering a work setting or the information sent at the end of work.

Also, in the present embodiment, a work setting S0 set by the administrator on the administrator PC 102 is stored. Note that in Fig. 6, the work setting S0 of the administrator is for example set for a case wherein the operator W3 performs work in the farm field H2 using the tractor V3, however, the present invention is not limited to this. The administrator setting may be applied only to a specific farm field, tractor or operator, or to all the conditions.

Therefore, when an input is made for the server 101, on the work start input section 321 of the tablet terminal TAB, information on work settings corresponding to the operators W1 to W3, the tractors V1 to V3, and the farm fields H1, H2 is searched according to the identification information of the operator, identification information of the tractor 1 and GPS information sent from the tablet terminal TAB. Then, if there is registered information on the corresponding work setting, the work setting information is sent to the tablet terminal TAB. As illustrated in the cells of work settings BC1, CB1, CC1 in Fig. 6, when there is no work setting registered, if the standard settings B, C are registered, the fact that the standard settings B, C exist is sent to the tablet terminal TAB.

At this time, if there is a work setting registered in association with the same tractor and the same farm field, but with a different operator, the fact that corresponding work settings AC1, AB1, BB1 exist is also send to the tablet terminal. On the tablet terminal TAB that has received it, the work setting selection image 340 of Fig. 5 (D) is displayed as described above, and when the standard setting or another person's work setting is selected, the server 101 sends the work setting information corresponding to the selection to the tablet terminal TAB.

Note that the present embodiment describes an example configuration in which the operator selects the standard setting or another person's work setting on the tablet terminal TAB, however, the present invention is not limited to this. When no work setting is registered for an operator her/himself, by preliminarily registering with the server 101 which one of the standard setting and another person's work setting is used, the input on the tablet terminal TAB for selection may be skipped. At this time, for the operator preliminarily registered with the server 101, the server 101 may automatically select a work setting, while for the operator not preliminarily registered with the server 101, selection may be made on the tablet terminal TAB.

Note that when there is no standard setting or another operator's work setting registered, error information that there is no applicable work setting is sent to the tablet TAB.

In this configuration, when there is no work setting registered for the relative operator, and a standard setting or other operators' work settings exist, the user makes selection on the tablet terminal TAB, however, the present invention is not limited to this. For example, the administrator may preliminarily register which one of the standard setting or another operator's work setting is executed, and work may be executed with the work setting set by the administrator. Therefore, in this case, the administrator's setting may have priority over the others so that no work setting selection is made by the user. Or, preliminary selection and registration by the administrator may be made individually for the respective users, vehicles, or farm fields, or for all work settings of a specific user or a specific farm field, or for all the settings together. Also, for the operator, vehicle, and farm field that the administrator has preliminarily selected and registered, a work setting that the administrator has selected may automatically be selected, while for the operator, vehicle, and farm field that the administrator has not preliminarily selected and registered, selection may be made on the tablet terminal TAB by the user.

In the present embodiment, if the operator her/himself is not registered, authentication is not made in the first place. Note that when the operator her/himself is not registered, s/he may execute work with the administrator's work setting as a guest.

In the present embodiment, if the tractor itself is not registered, error information that the tractor is not registered is sent to the tablet TAB. Note that even when the tractor is not registered, if a standard setting is registered, the standard setting may be sent to perform work. Then, after the work is finished, the unregistered tractor may be newly registered with the server 101 when the work setting is updated and registered. Similarly, when a farm field is not registered, the unregistered farm field may be newly registered with the server 101 when the work setting is registered.

Note that the configuration is not limited to one in which the work settings are set for the operators W1 to W3, the tractors V1 to V3, and the farm fields H1, H2, and they may be finely categorized according to work contents and then stored. For example, as work contents performed by the operator W1 in the farm field H1 using the tractor V1, work settings may be respectively registered for "cultivating", "soil levelling", "plowing", and the like. More specifically, according to types of implements attached to the tractor 1 or environments in which work is performed (e.g., whether work is performed in the farm field with or without water filled), work settings may be respectively registered for the engine speed, transmission responsiveness, cultivation depth, etc. so that one is selected to perform work.

### (Explanation of Flowchart of Work Setting Process)

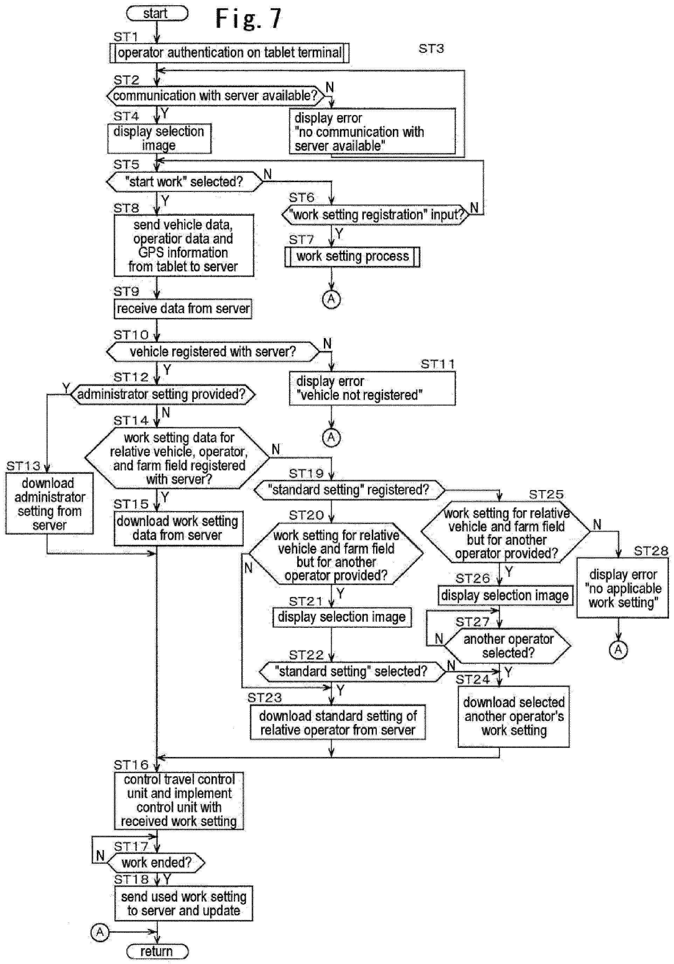

Fig. 7 illustrates an explanatory diagram of a flowchart of a work setting process of the Embodiment 1.

In the flowchart of Fig. 7, steps ST are processed according to a program stored in the control unit CD of the tablet TAB. Also, the process is executed in parallel with other processes of the tablet TAB.

The flowchart of Fig. 7 is started by activating the processing software AP1 in the tablet TAB.

In ST1 of Fig. 7, on the tablet terminal TAB, authentication of the operator is carried out (The image 310 is displayed, an input is made on input sections 311, 312, and it is determined whether an input is made on the authentication execution input section 313). Then, the step proceeds to ST2.

In ST2, it is determined whether communication with the server 101 is possible. More specifically, it is determined whether communication is impossible because of no reception of signals or the like. If yes (Y), the step proceeds to ST4, and if no (N), to ST3.

In ST3, an error that there is no communication is available with the server is displayed on the touch panel TAB1, and the step returns to ST2 and standbys until communication becomes possible.

In ST4, the operation selection image 320 is displayed, and the step proceeds to ST5.

In ST5, it is determined whether an input is made on the work start input section 321. If no (N), the step proceeds to ST6, and if yes (Y), to ST8.

In ST6, it is determined whether an input is made on the work setting registration section 322. If yes (Y), the step proceeds to ST7, and if no (N), returns to ST5.

In ST7, the work setting process is executed, that is, the image 330 for registering a work settings is displayed on the touch panel TAB1, and when an input is made on the input sections 331 to 337, and an input is made on the registration input section 338, the work setting information is sent to the server 101 and registered, and the step returns to ST1.

In ST8, identification information of the working vehicle (the tractor 1), identification information of the operator (the operator's ID), and GPS information is sent from the tablet TAB to the server 101. Then, the step proceeds to ST9.

In ST9, data is received from the server 101, and the step proceeds to ST10.

In ST10, it is determined whether the tractor 1 is registered with the server 101. If no (N), the step proceeds to ST11, and if yes (Y), to ST12.

In ST11, an error that the vehicle is not registered is displayed on the touch panel TAB1. Then, the step returns to ST1.

In ST12, it is determined whether there is a work setting registered by the administrator. If yes (Y), the step proceeds to ST13, and if no (N), to ST14.

In ST13, the administrator's work setting is received (downloaded) from the server 101. Then, the step proceeds to ST16.

In ST14, it is determined whether work setting information on the relative vehicle (the currently-used tractor 1), the relative operator (the currently-using operator), and the relative farm field is registered with the server 101. If yes (Y), the step proceeds to ST15, and if no (N), to ST19.

In ST15, work setting information is received (downloaded) from the server 101. Then, the step proceeds to ST16.

In ST16, according to the received work setting, the travel control unit CA to the implement raising-lowering control unit CC are controlled, and work is performed. Then, the step proceeds to ST17.

In ST17, it is determined whether the end of work is input on the tablet TAB. If yes (Y), the step proceeds to ST18, and if no (N), ST17 is repeated.

In ST18, the used work setting is sent to the server 101, and the work setting registered with the server 101 is updated. Then, the step returns to ST1.

In ST19, it is determined whether a "standard setting" is registered for the relative operator. If yes (Y), the step proceeds to ST20, and if no (N), to ST25.

In ST20, it is determined whether there is a work setting associated with the relative vehicle and the relative farm field, but also with another operator. If yes (Y), the step proceeds to ST21, and if no (N), to ST23.

In ST21, the work setting selection image 340 is displayed. Then, the step proceeds to ST22.

In ST22, it is determined whether the standard setting is selected in the work setting selection image 340. If yes (Y), the step proceeds to ST23, and if no (N), to ST24.

In ST23, the standard setting of the relative operator (the currently-using operator) is received (downloaded) from the server 101, and the step proceeds to ST16.

In ST24, the selected another operator's work setting is received (downloaded) from the server 101. The step proceeds to ST16.

In ST25, it is determined whether there is a work setting associated with the relative vehicle and the relative farm field, but also with another operator. If yes (Y), the step proceeds to ST26, and if no (N), to ST27.

In ST26, the work setting selection image 340 (only the input section 342 to select another operator's work setting) is displayed. Then, the step proceeds to ST22.

In ST27, it is determined whether another operator is selected in the work setting selection image 340. If yes (Y), the step proceeds to ST24, and if no (N), ST27 is repeated (if another operator is not selected, the process is ended by the operation of the input button TAB2).

In ST28, an error that there is no applicable work setting exists is displayed on the touch panel TAB1. Then, the steps returns to ST1.

In the work setting system for a working vehicle S of the present embodiment of the configuration described here, work setting information is stored in the server 101, respectively in association with a plurality of the operators W1 to W3, corresponding to a plurality of the tractors V1 to V3 or a plurality of the farm fields. Then, when an operator performs work in one of the farm fields (H1, H2) using the specific tractor 1, a relative work setting is received from the server 101, and the tractor 1 is controlled according to the work setting. Therefore, work does not have to be set every time work is performed, and labor is saved in work setting.

Conventionally, when large-scale farmers owning a plurality of tractors perform work in a plurality of farm fields by a plurality of operators, if different tractors are used, even the same operator with the same work setting may not be able to perform work smoothly due to individual differences between the tractors 1 (e.g., stiffness of the steering wheel, accelerator, or brake). Since the work setting is registered with the tractor in the conventional art, work must be set for each tractor. On the other hand in the present embodiment, work setting information is received from the server 101, and therefore, labor is saved in inputting a work setting on each tractor.

Also conventionally, if farm fields are different, work may not be smoothly performed with the same work setting due to differences in soil stiffness, depths, etc. of the farm field. Since the work setting is registered with the tractor in the conventional art, work must be set for each farm field. On the other hand in the present embodiment, work setting information is received from the server 101, and therefore, a work setting executed with work performed before is automatically reflected. Therefore, labor is saved in inputting an appropriate work setting for each farm field.

In the present embodiment, if a standard setting is registered with no work setting registered, the standard setting is used. More specifically, even when the operator uses a tractor 1 for the first time in a farm field, which is different from another tractor 1 that s/he has been using, or when s/he performs work in a farm field for the first time, since a standard setting set according to the operator's preferences and habits is used, labor is saved in work setting compared with a case in which a work setting is input out of nothing.

Also in the present embodiment, even when there is no work setting information is registered for the relative operator, another operator's work setting may be used to perform work. Therefore, even in a first-time farm field or by a first-time tractor 1, work may be performed with an appropriate setting using a work setting of another operator who has performed work before, and labor is saved in work setting.

Moreover in the present embodiment, the work setting is sent to the server 101 at the end of work, and the registered information is updated. Therefore, when transmission responsiveness, etc. is modulated or changed after work is started, the changed work setting is registered with the server 101. Therefore, the work setting is updated to a more appropriate one, and work may be performed with the registered work setting from the next time. Also, even when work is performed by a first-time tractor 1 or in a first-time farm field, labor is saved in work setting from the next time.

Furthermore in the present embodiment, if there is an administrator's work setting, the administrator's work setting takes priority. Large-scale farmers such as farmers' organizations may want to give priority to the administrator's management over each operator's preferences, for the sake of quality management by the administrator and management of the tractor 1 and the farm field. Therefore, in the present embodiment, if it is preferable to give priority to the administrator's setting, work is performed by the prioritized administrator's work setting.

Note that in the present embodiment, the standard setting is stored in association with the operator, however, the present invention is not limited to this. For example, the standard setting may be set in association with each farm field or each tractor 1, not each operator. When the standard setting is set for each farm field with no work setting registered for the relative operator, tractor, and farm field, a standard setting for the same farm field may be used, or another operator's work setting for the same farm field or a work setting for the same farm field but also for another tractor may be selected.

Also, the present invention is advantageously applied to a case wherein there are a plurality of tractors 1, however, it may be applied to a case wherein only one tractor 1 exists. Even when there is only one tractor 1, labor is saved in inputting by receiving a work setting from the server 101. Especially, when a new tractor 1 is bought or replaced due to damage to the old one, labor is saved in inputting a work setting when the work setting of the old tractor 1 is transferred to the new tractor 1.

### [Explanation of Reference Numerals]

1, V1, V2, V3 ... working vehicle,
101 ... server,
A, B, C ... standard setting,
AB1, BB1, AC1 ... another operator's work setting,
H1, H2 ... farm field,
S ... work setting system for a working vehicle,
S0 ... administrator's work setting,
TAB, Pa1 ... work setting means, and
W1, W2, W3 ... operator.

To provide a work setting system for a working vehicle to save labor in work setting.
[Solution] The invention includes: a server that sends and receives information to and from a working vehicle V1, V2, V3; and a work setting means that sets work performed by the working vehicle V1, V2, V3; wherein the server stores work setting information respectively in association with a plurality of operators W1, W2, W3 operating the working vehicle V1, V2, V3; and the working vehicle V1, V2, V3 reads out work setting information associated with an operator that actually operates the working vehicle V1, V2, V3, and performs work according to the read work setting information, and therefore, labor is saved in work setting, and work is perform according to the read work setting information.

## Claims

1. A work setting system for a working vehicle, the system comprising:
a server (101) that sends and receives information to and from a working vehicle (1); and
a work setting means (TAB, Pa1) that sets work performed by the working vehicle (1); wherein
the server (101) stores work setting information respectively in association with a plurality of operators (W1, W2, W3) operating the working vehicle (1); and
the working vehicle (1) reads out work setting information associated with an operator that actually operates the working vehicle (1), and performs work according to the read work setting information.

2. A work setting system for a working vehicle, the system comprising:
a server (101) that sends and receives information to and from a working vehicle (1); and
a work setting means (TAB, Pa1) that sets work performed by the working vehicle (1); wherein
the working vehicle (1) includes a position measurement unit (TAB4, 230) for measuring the position of the working vehicle;
the server (101) stores work setting information respectively in association with a plurality of farm fields (H1, H2) to be worked; and
the working vehicle (1) reads out work setting information associated with the farm field (H1, H2) identified according to the position measurement result of the working vehicle (1), and work is performed according to the read work setting information.

3. The work setting system for a working vehicle of claim 1, wherein the work setting information includes at least one of transmission responsiveness, cultivation depth, and automatic brake strength of the working vehicle (1), on-off of an auto lift function to automatically raise an implement (18) in coordination with a turn of the working vehicle (1), on-off of an auto brake function to automatically brake an inner wheel of the working vehicle (1) in a turn thereof, on-off of a backup function to automatically raise the implement (18) when the working vehicle (1) travels backward, and the engine speed.

4. The work setting system for a working vehicle of claim 2, wherein the work setting information includes at least one of transmission responsiveness, cultivation depth, and automatic brake strength of the working vehicle (1), on-off of an auto lift function to automatically raise an implement (18) in coordination with a turn of the working vehicle (1), on-off of an auto brake function to automatically brake an inner wheel of the working vehicle (1) in a turn thereof, on-off of a backup function to automatically raise the implement (18) when the working vehicle (1) travels backward, and the engine speed.

5. The work setting system for a working vehicle of claim 1 or 3, wherein the server (101) stores the work setting information respectively in association with at least one of a plurality of working vehicles (V1, V2, V3), a plurality of farm fields (H1, H2) and a plurality of work contents.

6. The work setting system for a working vehicle of claim 2 or 4, wherein the server (101) stores the work setting information respectively in association with at least one of a plurality of working vehicles (V1, V2, V3), a plurality of operators (W1, W2, W3) and a plurality of work contents.

7. The work setting system for a working vehicle of claim 5 or 6, wherein when no work setting information is stored with the server (101) in association with the working vehicle (1), the farm field (H1, H2), the operator (W1, W2, W3), or the work content, the server (101) applies a work setting for the working vehicle (1) to actually use to perform work, according to another work setting information already stored.

8. The work setting system for a working vehicle of claim 7, wherein said another work setting information is associated with at least one of the same the working vehicle (1), the same farm field (H1, H2) or the same operator (W1, W2, W3) that is already stored.

9. The work setting system for a working vehicle of any one of claims 1 to 8, wherein when the work setting information registered by an administrator of the server (101) is stored with the server (101), the working vehicle (1) performs work using the administrator's work setting information.
